(19) Europäisches Patentamt
European Patent Office
Office européen des brevets

(11) **EP 4 534 971 A1**

(12) **EUROPEAN PATENT APPLICATION**
published in accordance with Art. 153(4) EPC

(43) Date of publication:
09.04.2025   Bulletin 2025/15

(21) Application number: 23811669.3

(22) Date of filing: 15.05.2023

(51) International Patent Classification (IPC):
*G01M 17/007* (2006.01)

(52) Cooperative Patent Classification (CPC):
G01M 17/007

(86) International application number:
PCT/JP2023/018105

(87) International publication number:
WO 2023/228795 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.05.2022   JP 2022084797

(71) Applicant: HORIBA, Ltd.
Kyoto-shi Kyoto 601-8510 (JP)

(72) Inventors:
• KOMATSU, Yoji
Kyoto-shi, Kyoto 601-8510 (JP)
• NAGAOKA, Makoto
Kyoto-shi, Kyoto 601-8510 (JP)

(74) Representative: Müller Hoffmann & Partner
Patentanwälte mbB
St.-Martin-Straße 58
81541 München (DE)

(54) **MACHINE LEARNING DEVICE, VEHICLE TESTING SYSTEM, MACHINE LEARNING METHOD, AND VEHICLE TESTING METHOD**

(57)   The present invention makes it possible to simplify the task of reproducing a load such as a road gradient resistance or the like when a vehicle is actually traveling on a road, and includes a learning data acquisition unit 51 that acquires learning data formed by load data that includes a road gradient resistance of a travel route and driving resistance variables deriving from a vehicle's behavior, and by vehicle traveling data that includes a vehicle's speed, accelerator pedal position, and brake pedal position when that vehicle is traveling on the travel route, and a machine learning unit 52 that employs machine learning to determine a correlation between the load data and the vehicle traveling data, and then creates a simulated gradient prediction model that shows the correlation between the load data and the vehicle traveling data.

FIG.1

**Description**

[Technical Field]

The present invention relates to a machine learning device, a vehicle testing system, a machine learning method, and a vehicle testing method that simplify the task of reproducing a load such as a road gradient load or the like generated when a vehicle is actually traveling on a road.

[Technical Background]

Conventionally, a road load simulation in which a vehicle performs simulated driving using a dynamometer installed in a test chamber is conducted based on vehicle traveling data obtained from actual on-road traveling. In this road load simulation, in order to reproduce the driving resistance generated in actual on-road traveling, a target driving resistance imparted to the vehicle by the dynamometer is set using a rolling resistance $(A + B \times V)$, an air resistance $(C \times V^2)$, inertia resistance $(I \times \alpha)$, or a road gradient resistance $(M \times g \times \sin\theta)$ and the like. Note that, during actual on-road traveling, in addition to the aforementioned driving resistance, inertia resistance, and road gradient resistance, driving resistance and the like deriving from the vehicle behavior (for example, acceleration and deceleration and the like) is also generated.

More specifically, a target driving resistance (RL [N]) is expressed using the following Equation 1.

$$RL = A + B \times V + C \times V^2 + I \times \alpha + M \times g \times \sin\theta_{Road} + F_{Variable}$$

wherein, V : vehicle speed [m/s]

A, B, C : driving resistance constants
$\theta_{Road}$ : road gradient (road gradient in the travel direction) [deg]
M : test vehicle weight
I : equivalent inertia weight [kg]
$\alpha$ : acceleration [m/s$^2$]
g : gravitational acceleration
$F_{Variable}$ : driving resistance variable deriving from the vehicle behavior (acceleration, deceleration, steering operation and the like)

Note that the values of item A, item B, and item C vary depending on the vehicle make, state of the road surface, type of tire and the like, and are different for each individual vehicle. Item C is an air resistance coefficient, while item A and item B are coefficients that show the rolling resistance.

Here, in a road load simulation, it is important to reproduce not only the aforementioned rolling resistance $(A + B \times V)$, air resistance $(C \times V^2)$, and inertia resistance $(I \times \alpha)$, but to also reproduce the road gradient resistance $(M \times g \times \sin\theta)$ and the driving resistance variable and the like deriving from the vehicle behavior $(F_{Variable})$. Conventionally, however, driving resistance variables $(F_{Variable})$ have not been considered, and only the road gradient $(\theta_{Road})$ has been measured (in spite of this measurement of the road gradient not being particularly accurate) and a gradient command value (i.e., a torque command value) based on this road gradient input into the dynamometer.

In contrast, as is described in Patent Document 1, a method may be considered in which a gradient profile is determined from the results of torque matching that is performed in order to reproduce the road gradient resistance $(M \times g \times \sin\theta_{Road})$ and the driving resistance variable and the like deriving from the vehicle behavior $(F_{Variable})$. In this method, it is possible to determine a value (hereinafter, referred to as a simulated gradient $(\theta_{Emulation})$) obtained by adding a value obtained by converting into a gradient the driving resistance variable $(F_{Variable})$ to the road gradient $(\theta_{Road})$. As a result, a gradient command value (i.e., a torque command value) based on this simulated gradient $(\theta_{Emulation})$ can be input into the dynamometer. Moreover, as is described in Patent Document 2, a method has also been disclosed in which a road gradient is calculated with a high degree of accuracy by combining a gyro sensor, an acceleration sensor, and GPS information and the like. Other methods include performing calculations from a gyro sensor, a wheel torque sensor, and values measured during actual travel such as outside air pressure measurements and the like, and performing calculations from altitude information from a commercially available topographical map or from a high-accuracy 3-dimensional map.

However, in the method described in Patent Document 1, it is necessary to perform torque matching each time travel on an actual road is performed, which requires considerable time and effort. Moreover, in the method described in Patent Document 2, time is needed in order to mount the various sensors such as gyro sensors and wheel torque sensors and the like, so that this method also is extremely troublesome. Furthermore, if an outside air pressure measurement method is employed, then not only is it difficult to detect small changes in the road gradient, but the measurements are affected by pressure variations due to factors other than the altitude, such as the effects of traveling through a tunnel or the like, and nor is it possible, in this method, to obtain a simulated gradient ($\theta_{Emulation}$). In addition, in a method that employs a commercially available topographical map, it is difficult to obtain, at a reasonable cost, data that covers all of the roads at a high enough level of detail and neither, in this method as well, is it possible to obtain a simulated gradient ($\theta_{Emulation}$).

[Documents of the Prior Art]

[Patent Documents]

[Patent Document 1] Japanese Unexamined Patent Application Publication (Translation of PCT Application) No. 2021-508799
[Patent Document 2] Japanese Patent No. 5273599

[Disclosure of the Invention]

[Problems to be Solved by the Invention]

The present invention was therefore conceived in view of the above-described problems, and it is a principal object thereof to enable the task of reproducing a load such as a road gradient resistance when a vehicle is actually traveling on a road, or driving resistance variables deriving from the vehicle behavior and the like to be simplified.

[Means for Solving the Problem]

In other words, a machine learning device according to the present invention is a machine learning device that creates a simulated gradient prediction model for use in vehicle testing, and is characterized in being provided with a learning data acquisition unit that acquires learning data formed by load data that includes road gradient resistance of a travel route and driving resistance variables deriving from a vehicle's behavior, and by vehicle traveling data that includes a vehicle's speed, accelerator pedal position, and brake pedal position when that vehicle is traveling on the travel route, and with a machine learning unit that employs machine learning to determine a correlation between the load data and the vehicle traveling data, and then creates a simulated gradient prediction model that shows the correlation between the load data and the vehicle traveling data.

If this machine learning device is employed, then it is possible to create a simulated gradient prediction model that shows a correlation between load data that includes a road gradient resistance of a travel route ($M \times g \times \sin\theta_{Road}$) and a driving resistance variable ($F_{Variable}$) deriving from the vehicle behavior, and vehicle traveling data that includes a vehicle's speed, accelerator pedal position, and brake pedal position when that vehicle is traveling on the travel route. Accordingly, by inputting various types of vehicle traveling data into a simulated gradient prediction model, it is possible to obtain load data that includes the road gradient resistance ($M \times g \times \sin\theta_{Road}$) and driving resistance variables ($F_{Variable}$) deriving from the vehicle behavior that correspond to the respective types of vehicle traveling data. As a result, it is possible to simplify the task of reproducing a load such as the road gradient resistance ($M \times g \times \sin\theta_{Road}$) of the road actually traveled and driving resistance variables ($F_{Variable}$) deriving from the vehicle behavior and the like.

Here, it is desirable that the load data include a load that is calculated from a simulated gradient obtained by taking a value acquired by converting into a gradient a driving resistance variable deriving from the vehicle behavior into the consideration of the road gradient of the travel route.

A specific embodiment of the present invention that may be considered is a structure in which the learning data acquisition unit acquires learning data formed by load data used in a road load simulation, and the vehicle traveling data used at this time, and the machine learning unit uses machine learning to determine a correlation between the acquired load data and the vehicle traveling data, and then creates a simulated gradient prediction model that shows this correlation between the load data and the vehicle traveling data.

Mutually different vehicles have mutually different pedal characteristics. Even if the pedal settings are altered in the same vehicle (for example, between eco mode pedal settings and sports mode pedal settings and the like), the pedal characteristics in each mode are still mutually different.

In this case, in order to enable a created simulated gradient prediction model to be applied to vehicles having mutually different pedal characteristics, it is desirable that the machine learning unit use a pedal coefficient that shows the pedal characteristics of a vehicle in the simulated gradient prediction model so as to create a simulated gradient prediction model that corresponds to this pedal coefficient.

If this type of structure is employed, then in a case in which a created simulated gradient prediction model is used for mutually different vehicles, it is possible to easily create a simulated gradient prediction model that corresponds to these mutually different vehicles. Moreover, in a case in which the pedal settings are altered in the same vehicle, it is possible to easily create a simulated gradient prediction model corresponding to the post-alteration pedal settings.

It is also desirable that the learning data acquisition unit acquire, as the learning data, a road model that includes correct or known road gradients of at least a portion of the travel route, and that the machine learning unit use machine learning to determine a correlation between data created by removing the road gradient from the simulated gradient and the vehicle traveling data, and then create a vehicle behavior load model that shows a correlation between vehicle behavior load data created by removing the road gradient from the load data and the vehicle traveling data.

According to this structure, in a case in which there is a segment of a travel route is known in which the road gradient ($\theta_{Road}$), then it is possible to separate the road gradient resistance ($M \times g \times \sin\theta_{Road}$) from the driving resistance variables ($F_{Variable}$) deriving from the vehicle behavior.

It is also desirable that the learning data acquisition unit acquire first learning data that is formed by the load data of a first vehicle, the vehicle traveling data, and a model of the route traveled by the first vehicle, and that the learning data acquisition unit also acquire second learning data that is formed by the load data of a second vehicle, the vehicle traveling data, and a model of the route traveled by the second vehicle, and that the machine learning unit create the vehicle behavior load model for the first vehicle from the first learning data of the first vehicle, and create the vehicle behavior load model for the second vehicle from the second learning data of the second vehicle.

Moreover, a vehicle testing system according to the present invention is a vehicle testing system having a vehicle testing apparatus such as a dynamometer or the like that imparts a load generated during travel to a vehicle or to a portion thereof in the form of a test subject, and that is characterized by being provided with a model storage unit in which is stored a simulated gradient prediction model that shows a correlation between load data including a road gradient resistance of a travel route ($M \times g \times \sin\theta_{Road}$) and a driving resistance variable deriving from a vehicle's behavior ($F_{Variable}$), and vehicle traveling data including a vehicle speed, an accelerator pedal position, and a brake pedal position when the vehicle is traveling on the travel route, and with a load data calculation unit that calculates load data input into the vehicle testing apparatus from the vehicle traveling data and the simulated gradient prediction model.

It is also desirable that the model storage unit store a vehicle behavior load model that shows a correlation between vehicle behavior load data showing driving resistance variables deriving from the vehicle behavior and the vehicle traveling data, and that the load data calculation unit calculate the vehicle behavior load data from the vehicle traveling data and the vehicle behavior load model.

It is also desirable that testing of the second vehicle be performed using data from the first vehicle, and that the load data calculation unit calculate the load data input into the vehicle testing device that is testing the second vehicle using a road model of the travel route traveled by the first vehicle, and a vehicle behavior load model that shows a correlation between vehicle behavior load data showing driving resistance variables deriving from the vehicle behavior of the second vehicle and the vehicle traveling data.

It is also desirable that the second vehicle be a vehicle equipped, for example, with an advanced driver assistance system (i.e., be an ADAS vehicle) or be an autonomous driving vehicle (i.e., be an AD vehicle). Note that the second vehicle is not restricted to being an ADAS vehicle or an AD vehicle.

Furthermore, a machine learning method according to the present invention is a machine learning method employed in vehicle testing and desirably includes acquiring learning data made up of load data that includes a road gradient resistance of a travel route and driving resistance variables deriving from a vehicle's behavior, and vehicle traveling data that includes a vehicle's speed, accelerator pedal position, and brake pedal position when that vehicle is traveling on the travel route, and employing machine learning in order to determine a correlation between the load data and the vehicle traveling data, and then creating a simulated gradient prediction model that shows the correlation between the load data and the vehicle traveling data.

**In** addition to this, a vehicle testing method according to the present invention is a vehicle testing method in which a dynamometer that imparts a load generated during travel to a vehicle or to a portion thereof is employed, and is characterized in that the load data is calculated from the vehicle traveling data using a simulated gradient prediction model that shows a correlation between load data including a road gradient resistance of a travel route and driving resistance variables deriving from a vehicle's behavior, and vehicle traveling data including a vehicle speed, an accelerator pedal position, and a brake pedal position when that vehicle is traveling on the travel route, and the calculated load data is then input into the dynamometer and testing of the vehicle is performed.

[Effects of the Invention]

According to the present invention that is formed in the manner described above, it is possible to simplify the task of reproducing a road gradient resistance or the like of actual on-road travel.

[Brief Description of the Drawings]

[FIG. 1] FIG. 1 is a schematic view showing a vehicle testing system according to a first embodiment of the present invention.
[FIG. 2] FIG. 2 is a schematic view showing a machine learning period and a gradient prediction period of the first embodiment.
[FIG. 3] FIG. 3 is a schematic view showing a procedure followed by the vehicle testing system of the first embodiment.
[FIG. 4] FIG. 4 is a schematic view showing a procedure followed by a vehicle testing system of a second embodiment.
[FIG. 5] FIG. 5 is a schematic view showing a creation of a simulated gradient prediction model of a third embodiment.
[FIG. 6] FIG. 6 is a schematic view showing a procedure followed by a vehicle testing system of a fourth embodiment.
[FIG. 7] FIG. 7 is a view showing a procedure for calculating load data (i.e., a simulated gradient ($\theta_{Emulation}$)) of the fourth embodiment.
[FIG. 8] FIG. 8 is a schematic view showing a procedure followed by a vehicle testing system of a fifth embodiment.
[FIG. 9] FIG. 9 is a schematic view showing a procedure followed by a vehicle testing system of a variant example of the fifth embodiment.
[FIG. 10] FIG. 10 is a view showing a procedure for calculating load data (i.e., a simulated gradient ($\theta_{Emulation}$)) of a variant embodiment.

[Best Embodiments for Implementing the Invention]

Hereinafter, respective embodiments of a vehicle testing system according to the present invention will be described with reference to the drawings. Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

[First Embodiment]

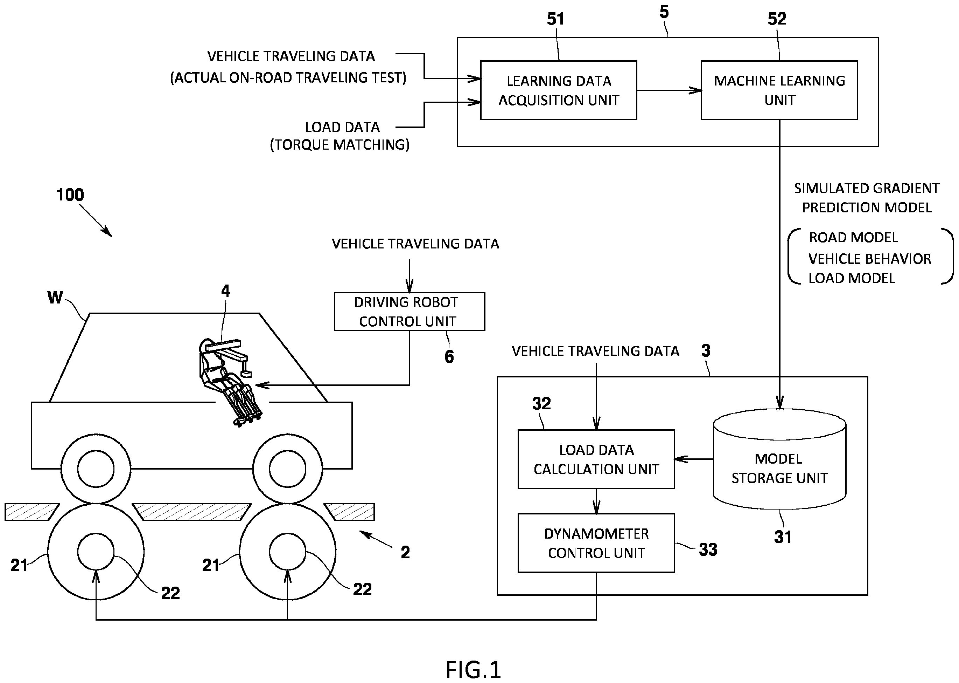

As is shown in FIG. 1, a vehicle testing system 100 of the first embodiment reproduces a traveling load generated during actual on-road travel by performing road load simulation control in a test chamber.

More specifically, the vehicle testing system 100 includes a chassis dynamometer 2 that causes a vehicle that is serving as a test subject to perform simulated traveling, and a control unit 3 that controls this chassis dynamometer 2. Note that the chassis dynamometer 2 includes rollers 21 on which tires of a vehicle are mounted, and dynamometers 22 that are connected to the rollers 21 and impart a load to a vehicle W via the rollers 21. Note that the vehicle that is tested is not limited to being a complete vehicle, and may instead be a portion of a vehicle having an engine, a motor, or a power train or the like.

Prior to a vehicle test by this vehicle testing system 100 being performed, the following tasks (1) to (3) are performed.

(1) On-road traveling testing (Road Test)
(2) Torque matching
(3) Machine learning of a simulated gradient prediction model

(1) On-Road Traveling Testing

This on-road traveling testing is testing performed via actual on-road traveling in order to obtain vehicle traveling data such as the vehicle speed, accelerator pedal position, brake pedal position and steering position and the like when that vehicle is traveling on an actual road. The accelerator pedal position may be the accelerator pedal position or the throttle opening. The brake pedal position may be the brake pedal position or the braking pressure. The steering position may be the steering angle, or from a difference between the left and right vehicle wheel speeds. Moreover, in this on-road traveling testing, the voltage or current of a battery or motor or the like, the warm-up state of an internal combustion engine (for example, the cooling water temperature or engine oil temperature or the like), the state of charge or state of deterioration of a battery, or the internal or ambient temperature of a battery or motor or the like and so on are acquired as vehicle information. Furthermore, the vehicle ambient temperature, humidity or air pressure or the like are acquired as environmental information, and the latitude, longitude, or altitude or the like are acquired as positional information. In addition to these, it is also possible for the emissions amount of a measurement target component contained in exhaust gas discharged from an internal combustion engine of a vehicle to be measured.

(2) Torque Matching

This torque matching is performed in order to acquire a dynamo load (i.e., a torque matching load (RepForce)) that is imparted by the chassis dynamometer 2 to the test subject in the form of the vehicle W by causing the vehicle W to travel on the chassis dynamometer 2.

More specifically, torque matching involves controlling a driver robot 4 installed in and driving the vehicle W so that an accelerator pedal position, a braking operating amount, and/or a gearshift position of an actual on-road traveling test are replicated, while also performing speed control of the chassis dynamometer 2 so that the speed of the vehicle W replicates the speed of the on-road traveling test. The dynamo load from the dynamometer obtained via these various controls are then acquired. Note that the dynamo load (i.e., the torque matching load (RepForce)) acquired via these tests is used in the machine learning described below. Furthermore, using torque matching, it is also possible to determine a value (a simulated gradient ($\theta_{Emulation}$)) acquired by adding the result obtained when the driving resistance variable ($F_{Variable}$) is converted into a gradient to the road gradient ($\theta_{Road}$).

The method used to derive $\theta_{Emulation}$ can be expressed by the following equations.

$$RepForce = A + BV + CV^2 + I\alpha + Mgsin\theta_{Road} + F_{Variable}$$

$$Mgsin\theta_{Emulation} = Mgsin\theta_{Road} + F_{Variable}$$

$$\theta_{Emulation} = sin^{-1}\left((RepForce - (A + BV + CV^2 + I\alpha)) / Mg\right)$$

(3) Machine Learning of Simulated Gradient Prediction Model

This machine learning is performed by a machine learning device 5 shown in FIG. 1. The machine learning device 5 includes a learning data acquisition unit 51 that acquires learning data that is used to create a simulated gradient prediction model, and a machine learning unit 52 that creates the simulated gradient prediction model using the learning data.

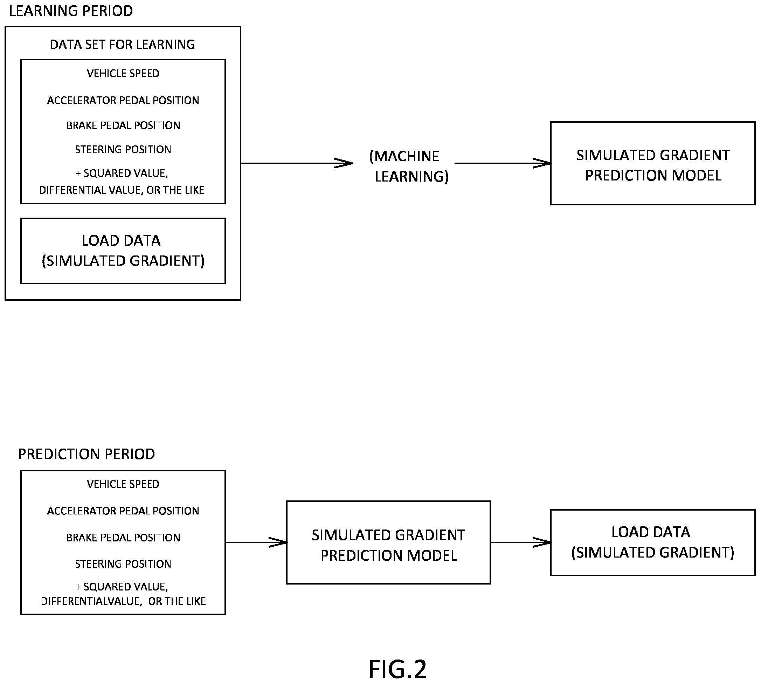

As is shown in the "Learning Period" box in FIG. 2, the learning data is formed by load data showing a dynamo load obtained via the aforementioned torque matching, and vehicle traveling data used in the torque matching.

The load data used in the learning data is, for example, a value (the simulated gradient ($\theta_{Emulation}$)) acquired by taking the result obtained when the driving resistance variable ($F_{Variable}$) is converted into a gradient into the consideration of (in this case, by adding it to) the road gradient ($\theta_{Road}$). Moreover, this load data may also be a sum of the "gradient resistance ($M \times g \times sin\theta_{Road}$)" and the "value obtained when the driving resistance variable ($F_{Variable}$) deriving from the vehicle behavior is converted into a gradient resistance".

The vehicle traveling data used in the learning data is formed by the vehicle speed, accelerator pedal position, brake pedal position, or steering position or the like when the vehicle is traveling along a travel route, or by a squared value or differential value or the like determined from these.

The machine learning unit 52 performs machine learning to determine a correlation between the load data obtained via the above-described torque matching, and the vehicle traveling data used in the torque matching, and creates a simulated gradient prediction model (i.e., a machine learning model) showing a correlation between the load data (i.e., the simulated gradient ($\theta_{Emulation}$)) and the vehicle traveling data. As is shown in the "Prediction Period" box shown in FIG. 2, by inputting the vehicle traveling data into this simulated gradient prediction model, it is possible to calculate the simulated gradient ($\theta_{Emulation}$) of the travel route for which this vehicle traveling data has been acquired. Note that the machine learning algorithm employed in the machine learning unit 52 is machine learning (for example, a recurrent neural network RNN) characterized in that it receives inputs of information about the past and uses these to make predictions about the present and the future.

[Testing Procedure Used in the First Embodiment]

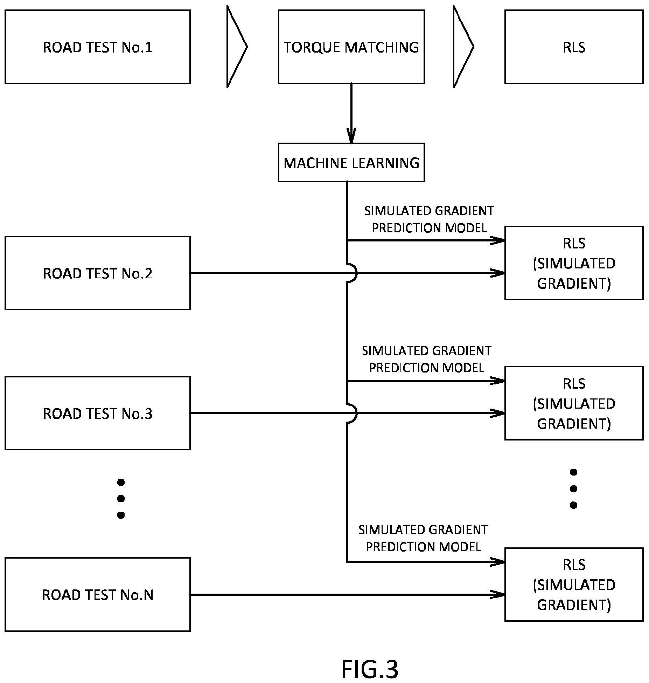

The testing procedure used in the first embodiment is shown in FIG. 3. The vehicle used as the test subject underwent a first on-road traveling test (Road Test No. 1) in order to acquire the vehicle traveling data used to form the learning data.

Here, it is desirable that the vehicle traveling data used to form the learning data include a wide driving range. In this cse, the driving range becomes proportionally greater as the number of trips or the traveling time increases, and this tends to improve the learning accuracy or the prediction accuracy of the machine learning. For example, there is a wide range of calculation values such as the vehicle speed, acceleration and deceleration, steering position or road gradient, or squared values or differential values or the like determined from these, and a traveling test that covers all of these combinations is desirable. More specifically, including, for example, a combination of urban streets, mountains roads, and freeways in a 30-minute traveling test may be considered. In addition, acquiring vehicle traveling data by performing traveling tests using a plurality of drivers on each of a plurality of travel routes may also be considered.

Next, torque matching is performed using the vehicle traveling data obtained from this first on-road traveling test, and load data (i.e., a simulated gradient ($\theta_{Emulation}$)) is then created using the measured RepForce.

Using this load data (i.e., simulated gradient ($\theta_{Emulation}$)), the dynamometer control unit 33 performs road load simulation (RLS) control on the dynamometers 22 so as to cause the vehicle W to perform a simulated traveling test on the chassis dynamometer 2. Note that using the robot 4 to perform the driving of the vehicle in this road load simulation (RLS) control may be considered, however, it is also possible for this to be performed by a human being.

Meanwhile, using as the learning data the vehicle traveling data obtained in the first on-road traveling test, and the load data obtained from the torque matching (i.e., the simulated gradient ($\theta_{Emulation}$)), machine learning is employed in order to determine a correlation between these, and a simulated gradient prediction model that shows this correlation between the vehicle traveling data and the load data (i.e., the simulated gradient ($\theta_{Emulation}$)) is created. This simulated gradient prediction model is stored in a model storage unit 31 of the control unit 3 (see FIG. 1). Note that the simulated gradient prediction model may also be stored in a separate information processing device from the control unit 3.

In a case in which a second through Nth on-road traveling test (i.e., Road Test No. 2 ~ N) are performed, the vehicle traveling data obtained from these on-road traveling tests is input into the control unit 3 without firstly undergoing torque matching. As a result, a load data calculation unit 32 of the control unit 3 inputs the vehicle traveling data into the simulated gradient prediction model, and calculates the load data (i.e., the simulated gradient ($\theta_{Emulation}$)) that is used to perform a simulated traveling test for each on-road traveling test. Using this calculated load data (i.e., the simulated gradient ($\theta_{Emulation}$)), the dynamometer control unit 33 performs road load simulation (RLS) control on the dynamometers 22 so that a simulated traveling test of the vehicle W is performed on the chassis dynamometer 2. Note that using the robot 4 to perform the driving of the vehicle in this road load simulation (RLS) control may be considered, however, it is also possible for this to be performed by a human being.

[Effects Obtained from the First Embodiment]

According to the vehicle testing system 100 of the present embodiment that is formed in the manner described above, it is possible to create a simulated gradient prediction model that shows a correlation between load data (i.e., the simulated gradient ($\theta_{Emulation}$)) that includes the gradient resistance of the travel route ($M \times g \times \sin\theta_{Road}$) and the driving resistance variables ($F_{Variable}$) deriving from the vehicle behavior, and the vehicle traveling data that includes the vehicle's speed, accelerator pedal position, and brake pedal position when that vehicle is traveling on the travel route. Accordingly, by inputting various types of vehicle traveling data into a simulated gradient prediction model, it is possible to output and obtain load data (i.e., the simulated gradient ($\theta_{Emulation}$)) for this vehicle traveling. As a result, it is possible to easily reproduce a load such as the gradient resistance ($M \times g \times \sin\theta_{Road}$) of the road actually traveled and driving resistance variables ($F_{Variable}$) deriving from the vehicle behavior and the like.

[Second Embodiment]

Next, a vehicle testing method and a machine learning method according to a second embodiment of the present invention will be described.

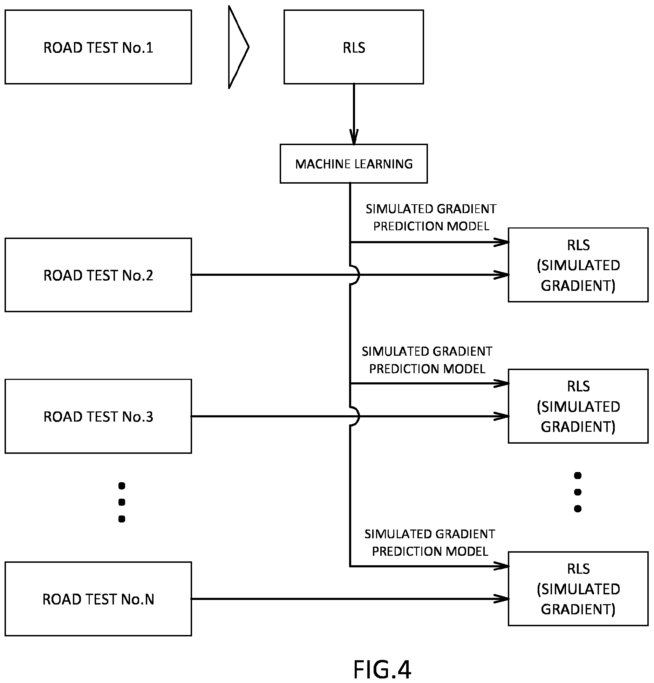

In the vehicle testing method and machine learning method of the second embodiment, the machine learning method used by the machine learning device 5 differs from that employed in the first embodiment. Namely, as is shown in FIG. 4, a simulated gradient prediction model is created without performing torque matching using vehicle traveling data obtained from an on-road traveling test.

More specifically, the learning data acquisition unit 51 of the machine learning device 5 acquires learning data made up of the load data (i.e., an input gradient $\theta$) used in an optional road load simulation (RLS), and the vehicle traveling data obtained from the on-road traveling test. Note that the vehicle traveling data may be created from actual travel data obtained when an actual vehicle travels on an actual travel route, or may be created from virtual travel data obtained when a virtual vehicle travels on a virtual travel route.

Next, the machine learning unit 52 employs machine learning to determine a correlation between the load data (i.e., the input gradient $\theta$) used in the aforementioned road load simulation, and the vehicle traveling data used in this road load simulation, and creates a gradient prediction model (i.e., a machine learning model) that shows a correlation between the load data (i.e., the input gradient $\theta$) and the vehicle traveling data. By inputting the vehicle traveling data into this gradient prediction model, it is possible to calculate the simulated gradient ($\theta_{Emulation}$) of the travel route for which the vehicle traveling data was acquired.

[Effects Obtained from the Second Embodiment]

According to the second embodiment, it is possible to easily reproduce a load such as the gradient resistance (M $\times$ g $\times$ sin$\theta_{Road}$) of the road actually traveled and driving resistance variables ($F_{Variable}$) deriving from the vehicle behavior and the like by creating a simulated gradient prediction model without performing torque matching using vehicle traveling data obtained from an on-road traveling test.

[Third Embodiment]

Next, a vehicle testing method and a machine learning method according to a third embodiment of the present invention will be described.

In the vehicle testing method and machine learning method of the third embodiment, the structure of the machine learning unit 52 of the machine learning device 5 differs from that employed in the respective foregoing embodiments.

More specifically, the machine learning unit 52 creates a simulated gradient prediction model for each pedal characteristic using the simulated gradient prediction models created in the first and second embodiments, and mutually different pedal coefficients. Note that the term 'pedal coefficient' refers to a coefficient showing pedal characteristics, and can be represented by a value obtained by dividing the driving force by the pedal depression amount. Here, the vehicle speed or acceleration may be taken into account when calculating this value.

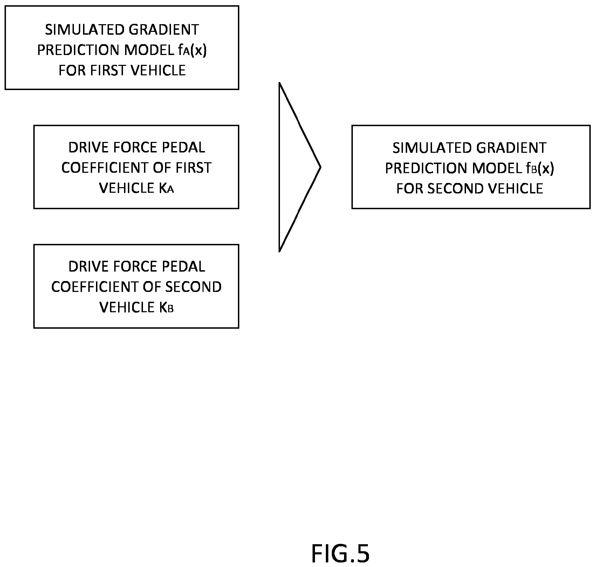

For example, as is shown in FIG. 5, for mutually different vehicles (namely, a first vehicle and a second vehicle), the machine learning unit 52 uses a simulated gradient prediction model, $f_A(x)$ created in the first vehicle, and a ratio ($K_B/K_A$) between a pedal coefficient, $K_A$ of the first vehicle and a pedal coefficient, $K_B$ of the second vehicle to determine a simulated gradient prediction model, $f_B(x)$ for the second vehicle by performing the calculation, $f_B(x) = f_A(x) \times (K_B/K_A)$.

Moreover, in a case in which the pedal settings are altered (such as between eco mode pedal settings and sports mode pedal settings or the like) even if the vehicle remains the same, the machine learning unit 52 uses the created simulated gradient prediction model, $f_A(x)$, and also a ratio ($K_C/K_A$) between the pedal coefficient, $K_A$ of the pedal settings when the simulated gradient prediction model was created and a pedal coefficient, $K_C$ of the post-alteration pedal settings to determine a simulated gradient prediction model, $f_C(x)$ for the post-alteration pedal settings by performing the calculation, $f_C(x) = f_A(x) \times (K_C/K_A)$.

[Effects Obtained from the Third Embodiment]

According to the vehicle testing system 100 of the present embodiment that is formed in the manner described above, in addition to the effects obtained from the first and second embodiments, in a case in which a created simulated gradient prediction model is used for different vehicles, it is possible to easily create a simulated gradient prediction model that corresponds to these different vehicles. In addition, in a case in which the pedal settings are altered in the same vehicle, it is possible to easily create a simulated gradient prediction model that corresponds to the post-alteration pedal settings.

[Fourth Embodiment]

Next, a vehicle testing method and a machine learning method according to a fourth embodiment of the present invention will be described.

In the vehicle testing method and machine learning method of the fourth embodiment, the structure of the machine learning unit 52 of the machine learning device 5 differs from that employed in the respective foregoing embodiments.

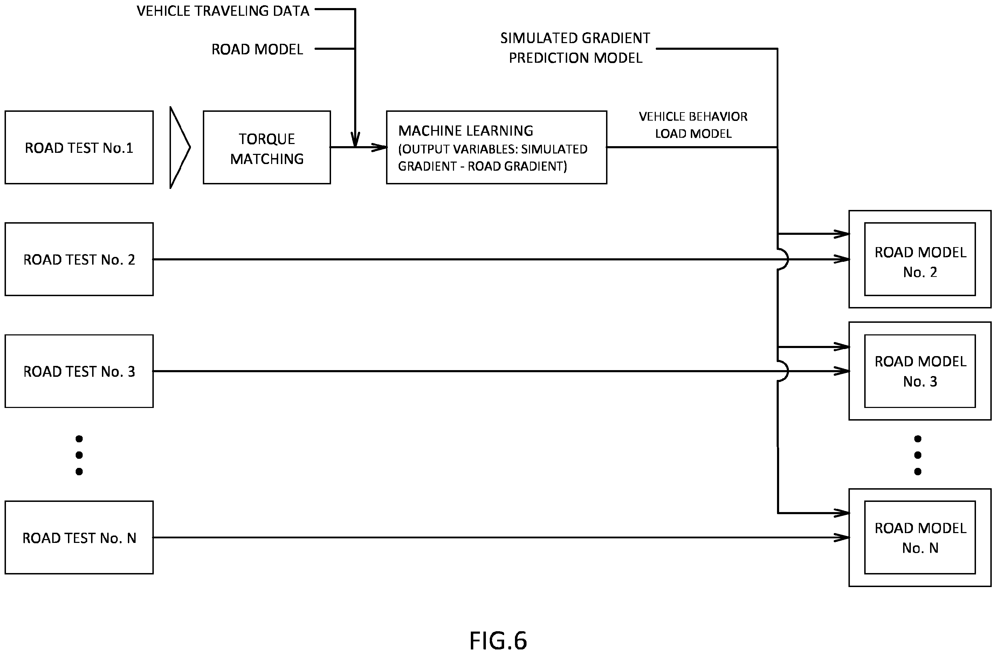

More specifically, as is shown in FIG. 6, the learning data acquisition unit 51 of the machine learning device 5 acquires a road model that includes the road gradient ($\theta_{Road}$) of at least a portion of the travel route as the learning data that is used to create a gradient prediction model. Note that the road model includes at least a gradient output model that shows a correlation between the vehicle information (for example, the vehicle speed or positional information such as the latitude and longitude thereof) and the road gradient ($\theta_{Road}$). This gradient output model may be in the form of road map data.

Next, the machine learning unit 52 performs machine learning so as to determine a correlation between the road model, the simulated gradient excluding the road gradient, and the vehicle traveling data, and creates a vehicle behavior load model that shows a correlation between the vehicle behavior load data in which the road gradient ($\theta_{Road}$) has been excluded from the load data (simulated gradient ($\theta_{Emulation}$)), and the vehicle traveling data.

An example of the procedures for creating a vehicle behavior load model and for creating a road model in each on-road traveling test is depicted in FIG. 6.

The road model is acquired by defining a segment of the on-road traveling test whose road gradient ($\theta_{Road}$) is known as Road Test No. 1. Next, the vehicle traveling data and load data (simulated gradient ($\theta_{Emulation}$)) obtained by torque matching are acquired together with this road model as learning data.

Next, machine learning is performed in order to determine a correlation between the vehicle behavior load data ($\sin^{-1}(F_{Variable}/Mg)$) in which the road gradient ($\theta_{Road}$) has been excluded from the load data (simulated gradient ($\theta_{Emulation}$)), and the vehicle traveling data, and a vehicle behavior load model showing the correlation between the vehicle behavior load data ($\sin^{-1}(F_{Variable}/Mg)$) in which the road gradient ($\theta_{Road}$) has been excluded from the load data (simulated gradient ($\theta_{Emulation}$)), and the vehicle traveling data is created.

In a case in which second through Nth on-road traveling tests (Road Test No. 2 = No. N) are implemented, by excluding the 'vehicle behavior load data obtained from the vehicle traveling data for each on-road traveling test and the above-described vehicle behavior load model' from the 'load data obtained from the vehicle traveling data for each on-road traveling test and the above-described simulated gradient prediction model', it is possible to obtain a gradient resistance ($M \times g \times \sin\theta_{Road}$) of the travel route in each on-road traveling test. A road model can then be created in each on-road traveling test from the road gradient ($\theta_{Road}$) thereby obtained, and from the latitude and longitude information.

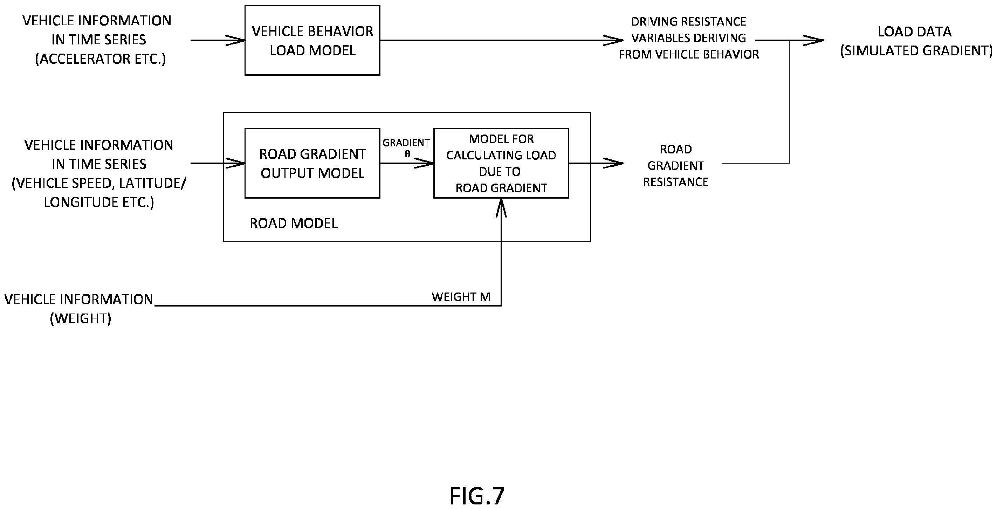

The calculation of the load data (simulated gradient ($\theta_{Emulation}$)) using the road model and vehicle behavior load model obtained in the manner described above will now be described with reference to FIG. 7.

The load data calculation unit 32 of the control device 3 inputs vehicle traveling data (i.e., the vehicle speed, accelerator pedal position, and brake pedal position and the like) into the vehicle behavior load model, and then calculates the driving resistance variables ($F_{Variable}$) deriving from the vehicle behavior. In addition, the load data calculation unit 32 inputs the vehicle traveling data (i.e., the vehicle speed, latitude, and longitude and the like) into the gradient output model included in the road model and calculates the road gradient ($\theta_{Road}$). As well as this, the load data calculation unit 32 also inputs this road gradient ($\theta_{Road}$) into a model that calculates the load generated by the road gradient, and calculates the gradient load ($M \times g \times \sin\theta_{Road}$). Furthermore, the load data calculation unit 32 finds the sum of the calculated driving resistance variables ($F_{Variable}$) deriving from the vehicle behavior and the gradient load ($M \times g \times \sin\theta_{Road}$). The load data (simulated gradient ($\theta_{Emulation}$)) is then calculated from the value of this sum. Next, as a result of the dynamometer control unit 33 performing road load simulation (RLS) control on the dynamometers 22 using the load data (simulated gradient ($\theta_{Emulation}$)) obtained from the acquired sum, a simulated traveling test of the vehicle W is performed on the chassis dynamometer 2. Note that using the robot 4 to perform the driving of the vehicle in this road load simulation (RLS) control may be considered, however, it is also possible for this to be performed by a human being.

[Effects Obtained from the Fourth Embodiment]

According to the fourth embodiment, in addition to the effects obtained from each of the above-described embodiments, it is possible to obtain both a load model of the road gradient resistance ($M \times g \times \sin\theta_{Road}$), and a load model of the driving resistance variables ($F_{Variable}$) deriving from the vehicle behavior. As a result of this, the load of the road gradient resistance ($M \times g \times \sin\theta_{Road}$) and the driving resistance variables ($F_{Variable}$) deriving from the vehicle behavior can be determined separately from arbitrary vehicle traveling data. Consequently, the road model thus obtained can be utilized for testing and simulations in other vehicles.

[Fifth Embodiment]

Next, a vehicle testing method and a machine learning method according to a fifth embodiment of the present invention will be described.

In the vehicle testing method and machine learning method of the fifth embodiment, a vehicle behavior load model of the first vehicle and/or a road model of the route traveled by the first vehicle are created, and a vehicle behavior load model of the second vehicle and/or a road model of the route traveled by the second vehicle are created.

More specifically, the learning data acquisition unit 51 of the machine learning device 5 acquires first learning data in the form of load data (simulated gradient ($\theta_{Emulation}$)), vehicle traveling data, and a road model for the first vehicle, and acquires second learning data in the form of load data (simulated gradient ($\theta_{Emulation}$)), vehicle traveling data, and a road model for the second vehicle.

Next, the machine learning unit 52 creates a vehicle behavior load model of the first vehicle and/or a road model of the route traveled by the first vehicle from the first learning data for the first vehicle, and creates a vehicle behavior load model of the second vehicle and/or a road model of the route traveled by the second vehicle from the second learning data for the second vehicle.

[Vehicle Evaluation in the Fifth Embodiment]

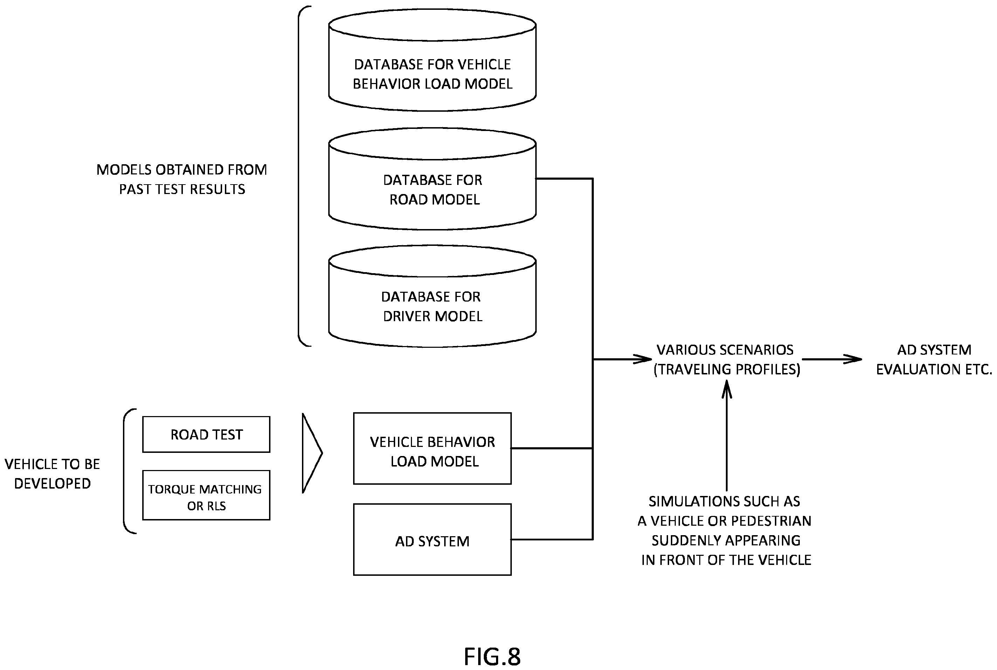

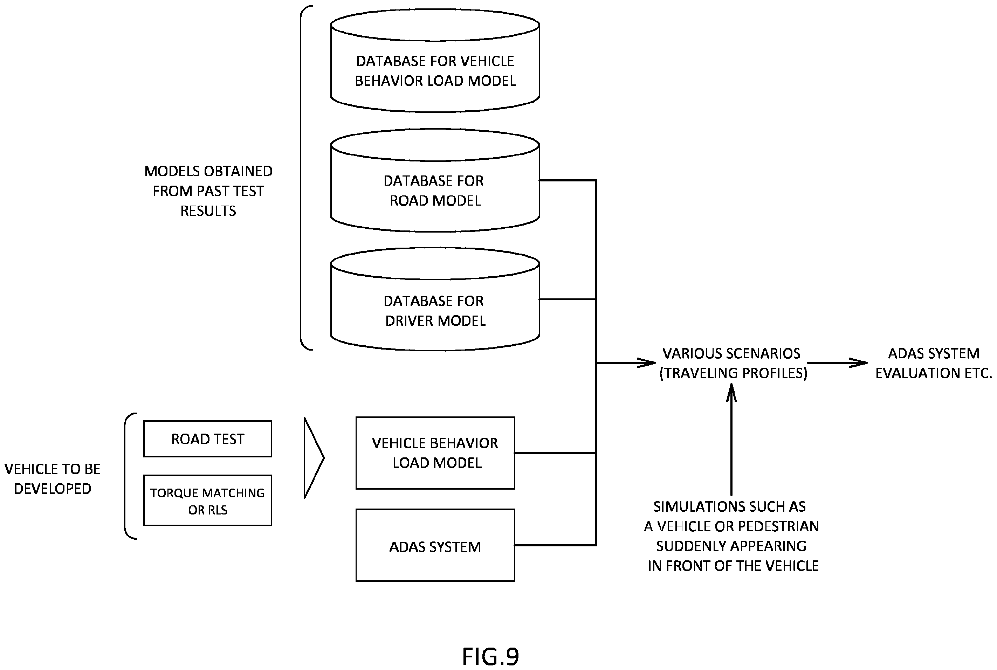

As is shown in FIG. 8 and FIG. 9, the above-described machine learning device 5 is able to construct a database of road models, a database of vehicle behavior load models, or a database of driver models from past test results for various vehicles (i.e., first vehicles). Note that the driver model is a model that shows driving characteristics of the driver and may be obtained from past vehicle testing data (i.e., the vehicle speed, engine state, accelerator pedal usage state, brake pedal usage state, or steering operation angle or the like), or it may be obtained from the vehicle speed and shift data in a time series, or by performing a predetermined calculation, or alternatively, the pure vehicle speed profile may be used without being modified in any way.

In a case in which a vehicle to be developed (i.e., the second vehicle) is an AD vehicle (see FIG. 8)

An evaluation is performed by combining the vehicle behavior load model obtained from the results of the on-road traveling test performed by the vehicle to be developed, a driving method performed using AD control (i.e., an AD system) for the vehicle to be developed, and a road model contained in the database. As a result, it is possible to evaluate an AD vehicle in a variety of scenarios (i.e., traveling profiles) such as on various travel routes. For example, it is possible to evaluate whether or not the AD system has operated correctly, or whether or not the dynamic behavior of the vehicle is as expected.

In a case in which a vehicle to be developed (i.e., the second vehicle) is an ADAS vehicle (see FIG. 9)

An evaluation is performed by combining the vehicle behavior load model obtained from the results of the on-road traveling test performed by the vehicle to be developed, and a road model and driver model contained in the databases. As a result, it is possible to evaluate an ADAS vehicle in a variety of scenarios (i.e., traveling profiles) such as on various travel routes. For example, it is possible to evaluate whether or not the ADAS system has operated correctly, or whether or not the dynamic behavior of the vehicle is as expected. Using the driving robot 4 to perform the driving of the vehicle in this evaluation may be considered, however, it is also possible for the driving to be performed by a human being.

Note that it is assumed that the above-described vehicle testing for AD/ADAS vehicles will be performed in a case in which a new AD/ADAS system is being developed, a case in which the same AD/ADAS system is being applied to another vehicle, or a case in which an AD/ADAS system is being added to an existing vehicle as an add-on.

[Effects Obtained from the Fifth Embodiment]

According to the vehicle testing method of the fifth embodiment, it is possible to create a variety of scenarios using a gradient load model and driver models and the like for a first vehicle obtained from past vehicle testing. As a result, it is possible to prepare numerous evaluation scenarios based on previous experience. In particular, by recreating these numerous scenarios on bench test equipment or in simulations, it is possible to make evaluations of higher quality (i.e., scenarios based on past experience and reproducible testing methods) and in a shorter time than in testing performed on public roads or on test courses.

[Additional Embodiments]

It is also possible, for example, for the machine learning unit 52 to perform machine learning so as to determine a correlation between a road model that includes the road gradient ($\theta_{Road}$), the load data (simulated gradient ($\theta_{Emulation}$)), and the vehicle traveling data, and create a gradient load model that shows a correlation between the gradient resistance ($M \times g \times \sin\theta_{Road}$) and the vehicle traveling data, and also create a vehicle behavior load model that shows a correlation between the vehicle behavior load data in which the road gradient ($\theta_{Road}$) has been excluded from the load data (simulated gradient ($\theta_{Emulation}$)) and the vehicle traveling data.

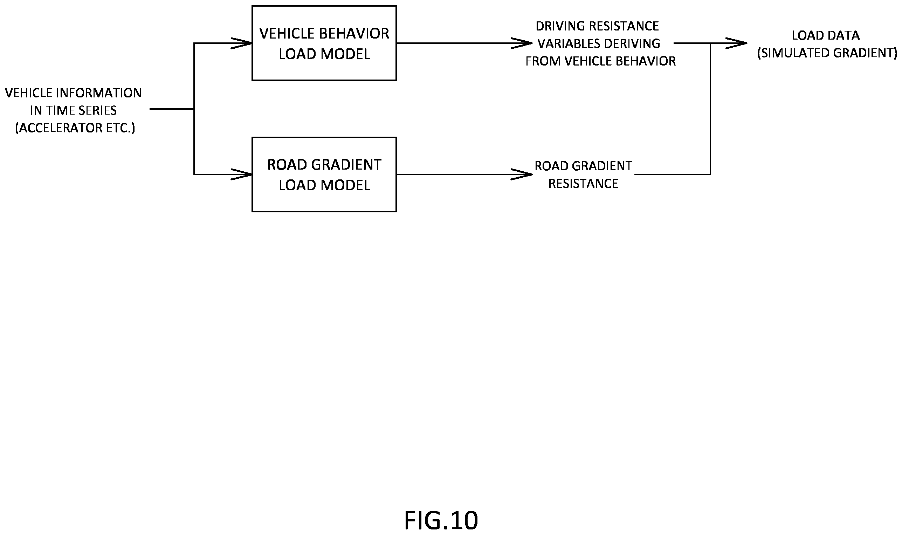

In this case, as is shown in FIG. 10, the load data calculation unit 32 of the control device 3 inputs the vehicle traveling data (i.e., the vehicle speed, accelerator pedal position, and the brake pedal position and the like) into the vehicle behavior load model, and calculates the driving resistance variables ($F_{Variable}$) deriving from the vehicle behavior. Moreover, the load data calculation unit 32 inputs the vehicle traveling data (i.e., the vehicle speed, accelerator pedal position, and the brake pedal position and the like) into the gradient load model, and calculates the gradient load ($M \times g \times \sin\theta_{Road}$). In addition, the load data calculation unit 32 finds the sum of the driving resistance variables ($F_{Variable}$) deriving from the vehicle behavior and the gradient load ($M \times g \times \sin\theta_{Road}$) that have been calculated. The value of this sum forms the load data (i.e., the simulated gradient ($\theta_{Emulation}$)). Next, the dynamometer control unit 33 performs road load simulation (RLS) control on the dynamometers 22 using the load data (i.e., the simulated gradient ($\theta_{Emulation}$)) obtained from the aforementioned sum so that, as a result, a simulated traveling test of the vehicle W is performed on the chassis dynamometer 2.

Moreover, the vehicle testing system of each of the above-described embodiments employs a chassis dynamometer that imparts a load to a vehicle, however, it is also possible to employ a dynamometer that imparts a load to a portion of a vehicle (for example, to the power train or engine or the like). In other words, the machine learning models obtained in each of the above-described embodiments can be used in a test in which the test subject is a portion of a vehicle, or in a full simulation test.

In addition, in a case in which the test subject is an ADAS vehicle or an AD vehicle, then it is also possible for vehicle signals to be used instead of physical operation amounts for the accelerator pedal position and brake pedal position and the like that are included in the vehicle traveling data.

Furthermore, it is also possible for the learning data to include a road surface condition of the travel route (for example, a road surface coefficient of friction, water puddles, and any uneven surfaces and the like). As a consequence, it is possible to create a gradient prediction model that takes the road surface condition of the travel route into consideration.

In addition to these, it is possible for the learning data to also include vehicle information such as the vehicle weight, the temperature of each portion of the vehicle, and the battery charging status, and the like. As a consequence, it is possible to create a simulated gradient prediction model, a vehicle behavior load model, or a road gradient load model that take variations in the vehicle conditions into consideration.

Moreover, it is also possible, for example, for environmental information such as the ambient temperature, humidity, and altitude and the like to be included in the learning data. By doing this, it becomes possible to create a simulated gradient prediction model that takes environmental information into consideration.

Furthermore, the load data used in the learning model are values (i.e., the simulated gradient ($\theta_{Emulation}$)) acquired by adding the result obtained when the driving resistance variable ($F_{Variable}$) is converted into a gradient to the road gradient ($\theta_{Road}$), however, this load data may also be formed by a total traveling load (i.e., the rolling resistance ($A + B \times V$)), the air resistance ($C \times V^2$), the inertia resistance ($I \times \alpha$), the road gradient resistance ($M \times g \times \sin\theta$), and driving resistance variables deriving from the vehicle behavior ($F_{Variable}$).

In each of the above-described embodiments, the calculated load data (i.e., the simulated gradient ($\theta_{Emulation}$)) is input into the dynamometers 22 and a simulated traveling test of the vehicle serving as the test subject is then performed, however, it is also possible for a simulation (i.e., a test carried out in a virtual environment) to be performed on a computer using the calculated load data (i.e., the simulated gradient ($\theta_{Emulation}$)).

In addition, in each of the above-described embodiments, load data obtained via torque matching is used, however, it is also possible, for example, for a load measured during actual on-road travel such as a load calculated from the torque or the like applied to a vehicle axle to be used in the machine learning.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

[Industrial Applicability]

According to the present invention it is possible to simplify the task of reproducing a load such as a road gradient resistance or the like when a vehicle is actually traveling on a road.

[Description of the Reference Numerals]

100 Vehicle Testing System
2 Chassis Dynamometer
3 Control Device
31 Model Storage Unit
32 Load Data Calculation Unit
33 Dynamometer Control Unit
4 Driving Robot
5 Machine Learning Device
51 Learning Data Acquisition Unit
52 Machine Learning Unit

**Claims**

**1.** A machine learning device that creates a simulated gradient prediction model for use in vehicle testing, comprising:

a learning data acquisition unit that acquires learning data formed by load data that includes a road gradient resistance of a travel route and driving resistance variables deriving from a vehicle's behavior, and by vehicle traveling data that includes a vehicle's speed, accelerator pedal position, and brake pedal position when that vehicle is traveling on the travel route; and

a machine learning unit that employs machine learning to determine a correlation between the load data and the vehicle traveling data, and then creates a simulated gradient prediction model that shows the correlation between the load data and the vehicle traveling data.

2. The machine learning device according to Claim 1, wherein the load data includes a load that is calculated from a simulated gradient obtained by taking a value acquired by converting into a gradient a driving resistance variable deriving from the vehicle behavior into the consideration of the road gradient of the travel route.

3. The machine learning device according to Claim 1 or 2, wherein

the learning data acquisition unit acquires learning data formed by load data used in a road load simulation, and the vehicle traveling data used at this time, and

the machine learning unit uses machine learning to determine a correlation between the acquired load data and the vehicle traveling data, and then creates a simulated gradient prediction model that shows this correlation between the load data and the vehicle traveling data.

4. The machine learning device according to any one of Claims 1 through 3, wherein the machine learning unit uses a pedal coefficient that shows the pedal characteristics of a vehicle in the simulated gradient prediction model so as to create a simulated gradient prediction model that corresponds to this pedal coefficient.

5. The machine learning device according to any one of Claims 2 through 4, wherein

the learning data acquisition unit acquires, as the learning data, a road model that includes correct or known road gradients of at least a portion of a travel route, and

the machine learning unit uses machine learning to determine a correlation between data created by removing the road gradient from the simulated gradient and the vehicle traveling data, and then creates a vehicle behavior load model that shows a correlation between vehicle behavior load data created by removing the road gradient from the load data and the vehicle traveling data.

6. The machine learning device according to Claim 5, wherein

the learning data acquisition unit acquires first learning data that is formed by the load data of a first vehicle, the vehicle traveling data, and a model of the route traveled by the first vehicle, and also acquires second learning data that is formed by the load data of a second vehicle, the vehicle traveling data, and a model of the route traveled by the second vehicle, and

the machine learning unit creates the vehicle behavior load model for the first vehicle from the first learning data of the first vehicle, and creates the vehicle behavior load model for the second vehicle from the second learning data of the second vehicle.

7. A vehicle testing system having a dynamometer that imparts a load generated during travel to a vehicle or to a portion thereof in the form of a test subject, comprising:

a model storage unit in which is stored a simulated gradient prediction model that shows a correlation between load data including a road gradient resistance of a travel route and a driving resistance variable deriving from a vehicle's behavior, and vehicle traveling data including a vehicle speed, an accelerator pedal position, and a brake pedal position when the vehicle is traveling on the travel route; and

a load data calculation unit that calculates load data input into the dynamometer from the vehicle traveling data and the simulated gradient prediction model.

8. The vehicle testing system according to Claim 7, wherein

the model storage unit stores a vehicle behavior load model that shows a correlation between vehicle behavior load data showing driving resistance variables deriving from the vehicle behavior and the vehicle traveling data, and

the load data calculation unit calculates the vehicle behavior load data from the vehicle traveling data and the vehicle behavior load model.

9. The vehicle testing system according to Claim 8, wherein

testing of the second vehicle is performed using data from the first vehicle, and
the load data calculation unit calculates the load data input into the vehicle testing device that is testing the second vehicle using a road model of the travel route traveled by the first vehicle, and a vehicle behavior load model that shows a correlation between vehicle behavior load data showing driving resistance variables deriving from the vehicle behavior of the second vehicle and the vehicle traveling data.

10. The vehicle testing system according to Claim 9, wherein the second vehicle is a vehicle equipped with an advanced driver assistance system or is an autonomous driving vehicle.

11. A machine learning method that is employed in vehicle testing in which:

learning data made up of load data that includes a road gradient resistance of the travel route and driving resistance variables deriving from a vehicle's behavior, and vehicle traveling data that includes a vehicle's speed, accelerator pedal position, and brake pedal position when that vehicle is traveling on the travel route are acquired; and in which
machine learning is employed in order to determine a correlation between the load data and the vehicle traveling data, and a simulated gradient prediction model is then created that shows the correlation between the load data and the vehicle traveling data.

12. A vehicle testing method that employs a dynamometer that imparts a load generated during travel to a vehicle or to a portion thereof in which:

the load data is calculated from the vehicle traveling data using a simulated gradient prediction model that shows a correlation between load data including a road gradient resistance of a travel route and driving resistance variables deriving from a vehicle's behavior, and vehicle traveling data including a vehicle speed, an accelerator pedal position, and a brake pedal position when that vehicle is traveling on the travel route; and
the calculated load data is then input into the dynamometer and testing of the vehicle is performed.

FIG.1

EP 4 534 971 A1

LEARNING PERIOD

DATA SET FOR LEARNING

VEHICLE SPEED

ACCELERATOR PEDAL POSITION

BRAKE PEDAL POSITION

STEERING POSITION

+ SQUARED VALUE,
DIFFERENTIAL VALUE, OR THE LIKE

LOAD DATA
(SIMULATED GRADIENT)

(MACHINE
LEARNING)

SIMULATED GRADIENT
PREDICTION MODEL

PREDICTION PERIOD

VEHICLE SPEED

ACCELERATOR PEDAL POSITION

BRAKE PEDAL POSITION

STEERING POSITION

+ SQUARED VALUE,
DIFFERENTIALVALUE, OR THE LIKE

SIMULATED GRADIENT
PREDICTION MODEL

LOAD DATA
(SIMULATED GRADIENT)

FIG.2

FIG.3

ROAD TEST No.1

RLS

MACHINE LEARNING

SIMULATED GRADIENT PREDICTION MODEL

RLS (SIMULATED GRADIENT)

ROAD TEST No.2

SIMULATED GRADIENT PREDICTION MODEL

RLS (SIMULATED GRADIENT)

ROAD TEST No.3

SIMULATED GRADIENT PREDICTION MODEL

RLS (SIMULATED GRADIENT)

• • •

ROAD TEST No.N

FIG.4

SIMULATED GRADIENT
PREDICTION MODEL $f_A(x)$
FOR FIRST VEHICLE

DRIVE FORCE PEDAL
COEFFICIENT OF FIRST
VEHICLE $K_A$

DRIVE FORCE PEDAL
COEFFICIENT OF SECOND
VEHICLE $K_B$

SIMULATED GRADIENT
PREDICTION MODEL $f_B(x)$
FOR SECOND VEHICLE

FIG.5

FIG.6

FIG.7

MODELS OBTAINED FROM
PAST TEST RESULTS

DATABASE FOR VEHICLE
BEHAVIOR LOAD MODEL

DATABASE FOR
ROAD MODEL

DATABASE FOR
DRIVER MODEL

VARIOUS SCENARIOS
(TRAVELING PROFILES)

AD SYSTEM
EVALUATION ETC.

VEHICLE TO BE
DEVELOPED

ROAD TEST

TORQUE MATCHING
OR RLS

VEHICLE BEHAVIOR
LOAD MODEL

AD SYSTEM

SIMULATIONS SUCH AS
A VEHICLE OR PEDESTRIAN
SUDDENLY APPEARING
IN FRONT OF THE VEHICLE

FIG.8

FIG.9

MODELS OBTAINED FROM PAST TEST RESULTS

DATABASE FOR VEHICLE BEHAVIOR LOAD MODEL

DATABASE FOR ROAD MODEL

DATABASE FOR DRIVER MODEL

VEHICLE BEHAVIOR LOAD MODEL

ADAS SYSTEM

VEHICLE TO BE DEVELOPED

ROAD TEST

TORQUE MATCHING OR RLS

VARIOUS SCENARIOS (TRAVELING PROFILES)

ADAS SYSTEM EVALUATION ETC.

SIMULATIONS SUCH AS A VEHICLE OR PEDESTRIAN SUDDENLY APPEARING IN FRONT OF THE VEHICLE

VEHICLE INFORMATION
IN TIME SERIES
(ACCELERATOR ETC.)

VEHICLE BEHAVIOR
LOAD MODEL

ROAD GRADIENT
LOAD MODEL

DRIVING RESISTANCE
VARIABLES DERIVING
FROM VEHICLE BEHAVIOR

ROAD GRADIENT
RESISTANCE

LOAD DATA
(SIMULATED GRADIENT)

FIG.10

# EP 4 534 971 A1

<table>
<tr><td colspan="2" style="text-align:center"><strong>INTERNATIONAL SEARCH REPORT</strong></td><td colspan="2">International application No.<br><br><strong>PCT/JP2023/018105</strong></td></tr>
</table>

**A.    CLASSIFICATION OF SUBJECT MATTER**

***G01M 17/007***(2006.01)i
FI:    G01M17/007 Z; G01M17/007 A

According to International Patent Classification (IPC) or to both national classification and IPC

**B.    FIELDS SEARCHED**

Minimum documentation searched (classification system followed by classification symbols)

G01M17/007; F02D29/00-29/02; G01C9/00-9/06; G06N20/00; G05B23/00-23/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2021-124403 A (MEIDENSHA CORPORATION) 30 August 2021 (2021-08-30) | 1-12 |
| A | JP 2002-014010 A (NISSAN MOTOR CO LTD) 18 January 2002 (2002-01-18) | 1-12 |
| A | JP 07-128195 A (UNISIA JECS CORP) 19 May 1995 (1995-05-19) | 1-12 |
| A | JP 2020-040449 A (TOYOTA MOTOR CORP) 19 March 2020 (2020-03-19) | 1-12 |
| A | JP 2014-024487 A (TOYOTA MOTOR CORP) 06 February 2014 (2014-02-06) | 1-12 |

☐ Further documents are listed in the continuation of Box C.       ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **20 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

24

## INTERNATIONAL SEARCH REPORT
### Information on patent family members

International application No.

**PCT/JP2023/018105**

| Patent document cited in search report | | | Publication date (day/month/year) | Patent family member(s) | Publication date (day/month/year) |
|---|---|---|---|---|---|
| JP | 2021-124403 | A | 30 August 2021 | WO 2021/157212 A1 | |
| JP | 2002-014010 | A | 18 January 2002 | (Family: none) | |
| JP | 07-128195 | A | 19 May 1995 | (Family: none) | |
| JP | 2020-040449 | A | 19 March 2020 | (Family: none) | |
| JP | 2014-024487 | A | 06 February 2014 | (Family: none) | |

Form PCT/ISA/210 (patent family annex) (January 2015)

**EP 4 534 971 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021508799 W

- JP 5273599 B